# EUROPÄISCHE PATENTANMELDUNG

(11) **EP 0 605 863 A2**
(43) Veröffentlichungstag der Anmeldung: **13.07.1994**
(21) Anmeldenummer: 93120913.4
(22) Anmeldetag: 27.12.1993
(51) Int. Cl.: C08L 77/00, C08K 3/22

(54) **Schwerentflammbare Polyamidformmassen**

(30) Priorität: 07.01.1993 DE 4300261; 11.01.1993 DE 4300451; 26.03.1993 DE 4309965; 15.07.1993 DE 4323676
(71) Anmelder: BAYER AG, 51368 Leverkusen (DE)
(72) Erfinder: El Sayed, Aziz, Dr., D-51375 Leverkusen (DE); Ostlinning, Edgar, Dr., D-40237 Düsseldorf (DE); Idel, Karsten-Josef, Dr., D-47802 Krefeld (DE); Freitag, Dieter, Dr., D-47802 Krefeld (DE)

(57) **Zusammenfassung**

Die Erfindung betrifft leichverarbeitbare Polyamidformmassen mit sehr guten mechanischen und elektrischen Eigenschaften sowie hoher Oberflächengüte, auf Basis von Polyamid, Magnesiumhydroxid und Polyhydroxyverbindungen vom Novolak-typ.

## Beschreibung

Die Erfindung betrifft leichverarbeitbare Polyamidformmassen mit sehr guten mechanischen und elektrischen Eigenschaften sowie hoher Oberflächengüte, auf Basis von Polyamid, Magnesiumhydroxid und Polyhydroxyverbindungen vom Novolak-typ.

Polyamide sind hochwertige Thermoplaste und zeichnen sich besonders aus durch
- leichte Verarbeitbarkeit
- sehr gute mechanische Eigenschaften
- sehr gute elektrische Eigenschaften
- hoche Wärmeformbeständigkeit
- gute Chemikalienbeständigkeit
- sehr gute Oberflächenqualität.

Die Eigenschaften der Polyamide lassen sich durch Verstärkung mit Glasfasern, Glaskugeln, mineralischen Füllstoffen oder Mischungen aus diesen merklich erweitern. Zusatz von Elastomeren verbessert z.B. die Schlagzähigkeit der verstärkten Polyamide. Die Vielzahl der Kombinationsmöglichkeiten ermöglicht eine sehr große Zahl von Produkten mit unterschiedlichsten Eigenschaften.

Durch den Einsatz von mineralischen Füllstoffen und/oder Glasfasern kann z.B. die Oberflächengüte negativ beeinflußt werden. Auch im Elektrobereich haben sich die Polyamide seit langem bewahrt. Für dieses Einsatzgebiet werden hauptsächlich brandgeschützte Polyamide verwendet. Folgende Brandschutzmittel sind bekannt und werden seit langem in Polyamiden eingesetzt:

### Roter Phosphor

Roten Phosphor Polyamiden zuzumischen ist z.B. aus der (DE-A 3 713 746 A 1 (= US-A 4 877 823), EP-A 299 444 (= US-A 5 081 222) bekannt. Hauptsächlich wird er glasfaserverstärktem PA 66 und 6/6T zugemischt. Wegen der roten Eigenfarbe des Phosphors und seines pigmentartigen Charakters können solche Compounds (Mischungen) nur in dunklen Farben geliefert werden. Außerdem neigen sie bei der Einwirkung von Feuchtigkeit und Wärme zur Bildung von Phosphin und Phosphaten (durch Disproportionierung des Phosphors). Phosphin korrodiert z.B. die kupferhaltigen Kontakte in elektrischen Installationen und Anlagen. Phosphate bilden dagegen leitfahige Beläge zwischen den elektrischen Kontakten. Durch geeignete Stabilisatoren wird die Disproportionierungsreaktion des Phosphors verzögert, aber nicht unterbunden.

### Organische Halogenverbindungen

Bromierte Diphenyle oder Diphenylether in Kombination mit Antimontrioxid als Zusatz zu Polyamiden wurden lange Zeit eingesetzt. Zunehmend werden folgenden Halogenverbindungen verwendet:
- Chlorierte cycloaliphatische Kohlenwasserstoffe (Dechlorane® plus von Occidental Chemical Co),
- Bromierte Styrol-Oligomere (z.B. in DE-A 2 703 419),
- Kernbromierte Polystyrole (z.B. PYRO-CHEK 68® von FERRO Chemicals).

Als Synergist zu den genannten Halogenverbindungen werden auch Zinksalze oder Eisenoxide eingesetzt. Die meisten Flammschutzmittel auf Halogenbasis beginnen sich bei den Verarbeitungstemperaturen von Polyamiden zu zersetzen. Dabei bilden sich korrodierend wirkende Gase Als Folge werden z.B. die elektrischen Kontakte in Schaltern bzw. elektrischen Installationen zerstört. Außerdem werden die elektrischen Eigenschaften der Polyamide durch die gebildeten ionogenen Spaltprodukte beeinträchtigt.

Für die Herstellung von Teilen in hellen Farben werden diese Nachteile jedoch in Kauf genommen.

### Stickstoffverbindungen

Unter den Stickstoffverbindungen haben sich vor allem Melaminsalze als Flammschutzmittel nur für unverstärkte Polyamide bewährt. Solche Produkte haben eine helle Eigenfarbe und besitzen gute elektrische Eigenschaften. Nachteilig ist die relativ niedrige Zersetzungstemperatur von Melaminsalzen.

### Magnesiumhydroxid

Magnesiumhydroxid hat sich als Flammschutzmittel für Polyolefine und Elastomere seit langem bewährt. Es hat gegenüber dem bisher verwendeten Aluminiumhydroxid den Vorteil der höheren Wasserabspaltungstemperatur (> 340° C). Den Einsatz von Magnesiumhydroxid in Polyamiden ist bekannt. Eine Konzentration von über 55 % ist allerdings erforderlich, um bei 1,6 mm Dicke die Bewertung V 0 nach UL 94 (US Brandprüfung nach Uunderwriter Laboratories) zu erreichen. Die Verarbeitbarkeit solcher Produkte ist problematisch. Die mechanischen Eigenschaften daraus hergestellter Formkörper sinken auf ein tieferes Niveau. Außerdem wird die Oberflächenqualität merklich verschlechtert. In der EP-A-335 165 (= US 4 963 610) wird vorgeschlagen Polyamid mit 0,1 bis 20 Gew.-% eines funktionalisierten Olefinhomo- oder Copolymeren und 3 bis 30 Gew.-% einer Verstärkungsfaser abzumischen, um mit 40 bis 70 Gew.-% speziellen Magnesiumhydroxidsorten (spez. Oberfläche weniger als 18 m²/g) flammhemmende Compounds herzustellen. Mit anderem Magnesiumhydroxid und ohne olefinische Additive wird die Bewertung V 0 bei 1,6 mm Dicke nach UL 94 nicht erzielt. Durch die Kopplung der speziellen Polyolefine an Polyamid und die hohen Füllgerade lassen sich solche Compounds nicht leicht verarbeiten.

Der Erfindung liegt die Aufgabe zugrunde, phosphor- und halogenfreie, leicht verarbeitbare Polyamidformmassen und Formteile hieraus ohne die bekannten Nachteile, mit der Klassifizierung V 0 bei 1,6 mm nach UL 94 herzustellen, die außerdem gute mechanische-, elektrische Eigenschaften und gute Oberflächen aufweisen,

Es wurde nun gefunden, daß durch die Kombination eines thermoplastischen Polyamids, 1 bis 10 Gew.-% einer Polyhydroxyverbindung Novolak-Typ mit einem Polymerisationsgrad von 3 bis 20, Verstärkungsstoffen, Elastomermodifikator, Magnesiumhydroxid, Additiven, wie Gleitmittel, Stabilisatoren und Nukleierungsmitteln, die genannten Eigenschaften erreicht werden.

Gegenstand der Erfindung sind schwerentflammbare Polyamidformmassen aus
A) von 35 bis 55 Gew.-%, bevorzugt 40 bis 53 Gew.-% eines thermoplastischen, teilkristallinen Polyamides,
B) von 1 bis 10 Gew.-%, bevorzugt von 3 bis 6 Gew.-% einer Polyhydroxyverbindung Novolak Typ mit einem Polymerisationsgrad von 3 bis 20,
C) von 0 bis 30 Gew.-% Verstärkungsstoffe,
D) von 0 bis 15 Gew.-%, bevorzugt 0 bis 10 % Elastomermodifikator,
E) von 40 bis 60 Gew.-%, bevorzugt 45 bis 55 Gew.-% Magnesiumhydroxid,
F) von 0 bis 2 Gew.-% Verarbeitungsadditive
die Verwendung der Polyamidformmassen zur Herstellung von Formkörpern sowie Formkörper aus den erfindungsgemäßen Formmassen.

Die Herstellung der erfindungsgemäßen Massen erfolgt auf handelsüblichen Einwellen- oder Zweiwellen-Extrudern bzw. Knetern. Die Dosierung des Magnesiumhydroxids erfolgt im Granulattrichter und/oder durch eine Seitenschnecke in der Polyamidschmelze. Die Zugabe der Verstärkungsstoffe C) (z.B. Glasfasern) erfolgt nach dem Stand der Technik in der Glasfaseröffnung kurz vor der Düse. Die Massetemperatur richtet sich nach den verwendeten Polyamiden und liegt zwischen 220 und 340° C.

Als thermoplastisches Polyamid A) der erfindungsgemäßen Formmassen eignen sich teilkristalline Polyamide (PA), insbesondere PA 6, PA 66, PA 46, PA 610, PA 6/6T oder teilkristalline Copolyamide auf Basis dieser Komponenten.

Als Polyhydroxyverbindung B) für die erfindungsgemäßen Formmassen eignen sich Bisphenole oder Polyphenole, bevorzugt werden Polykondensate aus Phenol oder Kresol mit Formaldehyd oder Bisphenolen wie in EP-A-423 564 beschrieben ist.

Als Verstärkungsstoffe C) für die erfindungsgemäßen Formmassen werden handelsübliche Glasfasern und/oder Kohlefasern und/oder Mineralfasern, gegebenenfalls mit Oberflächenbehandlung für Polyamide, bevorzugt Glasfasern, verwendet.

Als Elastomermodifikator D) gemäß dieser Erfindung werden handelsübliche EP(D)M-Kautschuke, Acrylkautschuke oder EVA Copolymere mit oder ohne funktionellen Kopplungsgruppen verwendet.

Als Magnesiumhydroxid E) gemäß dieser Erfindung wird handelsübliches Magnesiumhydroxid mit oder ohne Oberflächen-Behandlung verwendet. Durch die Behandlung der Oberflächen des Magnesiumhydroxids mit Aminosilanen oder Epoxide werden die mechanischen Eigenschaften deutlich verbessert. Feinteilige (0,4 bis 10 microns) Mg-Hydroxide mit einer Schüttdichte zwischen 0,3 und 0,8 g/ml können gemäß dieser Erfindung bevorzugt verwendet werden.

Die Verarbeitungsadditive F) bestehen aus handelsüblichen Gleitmitteln, Thermostabilisatoren und/oder Nukleierungsmitteln.

### Beispiele

### Folgende Produkte wurden in den Beispielen verwendet:

PA 6 = Durethan® B 31 F der Bayer AG,
Vulkadur RB® = Novolak der Bayer AG,
Magnesiumhydroxid = Magnefin H10B®, Securoc PA®,
Glasfaser = Bayerglas CS 7919®,
Elastomermodifikator = Exxelor VA 1801® bzw. 1803® der Fa. Exxon,
Amidwachs = Abril wax®.

### Beispiel 1 bis 10

Die Einsatzstoffe wurden zum Teil vorgemischt und bei einer Massetemperatur zwischen 250 und 290° C über einen Zweiwellenschneckenkneter extrudiert und anschließend granuliert. Das erhaltene Granulat wurde bei 70° C im Vakuumtrockenschrank 4 h getrocknet und anschließend auf einer Arburg Spritzgußmaschine bei einer Massetemperatur von 290° C zu Prüfkörpern verspritzt.

Die mechanischen und elektrischen Eigenschaften, das Brandverhalten nach UL 94 und die Oberflächengüte wurden bestimmt (s. Tabellen 1 und 2).

**Tabelle 1**

| Beispiel | | | 1 Vergleich | 2 | 3 Vergleich | 4 | 5 |
|---|---|---|---|---|---|---|---|
| PA 6 | | % | 44,9 | 42,9 | 35,9 | 34,6 | 29,4 |
| Mg-hydroxid | | % | 55,0 | 53,0 | 44,0 | 42,3 | 38,5 |
| Vulkadur RB | | % | 0,0 | 4,0 | 0,0 | 3,0 | 2,0 |
| Glasfaser | | % | 0,0 | 0,0 | 20,0 | 20,0 | 20,0 |
| Amidwachs | | % | 0,1 | 0,1 | 0,1 | 0,1 | 0,1 |
| Exxelor VA 1801 | | % | 0,0 | 0,0 | 0,0 | 0,0 | 10,0 |
| IZOD-Schlagzähigk. | | KJ/m² | 25 | 24 | 34 | 30 | 40 |
| Biegefestigkeit | | MPa | 135 | 156 | 238 | 245 | 210 |
| Randfaserdehnung | | % | 2,0 | 1,9 | 2,1 | 2,0 | 2,1 |
| Biege E-Modul | | MPa | 8200 | 8700 | 13200 | 14000 | 12500 |
| Zugfestigkeit | | MPa | 78 | 87 | 147 | 157 | 140 |
| Reißdehnung | | % | 2,7 | 2,4 | 1,7 | 1,6 | 1,7 |
| Zug E-Modul | | MPa | 9000 | 10000 | 13000 | 13600 | 12900 |
| CTI | | Volt | 600 | 600 | 600 | 600 | 600 |
| Glühdrahtfestigk. | | ° C | 960/1 mm | 960/1 mm | 960/1 mm | 960/1 mm | 960/1 mm |
| HDT B | | ° C | >200 | >200 | >200 | >200 | >200 |
| UL 94 | 2,3 mm | Stufe | V 0 | V 0 | V 0 | V 0 | V 0 |
| | 1,6 mm | Stufe | V 2 | V 0 | V 0 | V 0 | V 0 |
| | 1,2 mm | Stufe | V 2 | V 0 | V 2 | V 0 | V 0 |

| Fließspirale bei max. Spritzdruck 1150 bar | | | | | | | |
|---|---|---|---|---|---|---|---|
| 276° C | | cm | 24 | 36 | 19 | 40 | 32 |
| 296° C | | cm | 35 | 68 | 38 | 66 | 51 |

**Tabelle 2**

| Beispiel | | | 6 Vergleich | 7 | 8 Vergleich | 9 | 10 |
|---|---|---|---|---|---|---|---|
| PA 66 | | % | 44,9 | 42,9 | 35,9 | 34,6 | 29,4 |
| Mg-hydroxid | | % | 55,0 | 53,0 | 44,0 | 42,3 | 38,5 |
| Vulkadur RB | | % | 0,0 | 4,0 | 0,0 | 3,0 | 2,0 |
| Glasfaser | | % | 0,0 | 0,0 | 20,0 | 20,0 | 20,0 |
| Amidwachs | | % | 0,1 | 0,1 | 0,1 | 0,1 | 0,1 |
| Exxelor VA 1801 | | % | 0,0 | 0,0 | 0,0 | 0,0 | 10,0 |
| IZOD-Schlagzähigk. | | KJ/m² | 20 | 19 | 25 | 24 | 32 |
| Biegefestigkeit | | MPa | 139 | 146 | 239 | 242 | 217 |
| Randfaserdehnung | | % | 1,8 | 1,7 | 1,7 | 1,6 | 2,0 |
| Biege E-Modul | | MPa | 8300 | 8900 | 13300 | 14500 | 12800 |
| Zugfestigkeit | | MPa | 83 | 89 | 154 | 159 | 146 |
| Reißdehnung | | % | 2,2 | 2,0 | 1,7 | 1,6 | 1,7 |
| Zug E-Modul | | MPa | 9300 | 10100 | 13000 | 13600 | 12900 |
| CTI | | Volt | 600 | 600 | 600 | 600 | 600 |
| Glühdrahtfestigk. | | ° C | 960/1 mm | 960/1 mm | 960/1 mm | 960/1 mm | 960/1 mm |
| HDT B | | ° C | >230 | >230 | >230 | >230 | >230 |
| UL 94 | 2,3 mm | Stufe | V 0 | V 0 | V 0 | V 0 | V 0 |
| | 1,6 mm | Stufe | V 2 | V 0 | V 0 | V 0 | V 0 |
| | 1,2 mm | Stufe | V 2 | V 0 | V 2 | V 0 | V 0 |

## Patentansprüche

1. Schwer entflammbare Polyamidformmassen aus:
A) von 35 bis 55 Gew.-% thermoplastischem, teilkristallinem Polyamid,
B) von 1 bis 10 Gew.-% einer Polyhydroxyverbindung vom Novolak-Typ mit einem Polymerisationsgrad von 3 bis 20
C) von 0 bis 30 Gew.-% Verstärkungsstoffe,
D) von 0 bis 15 Gew.-% Elastomermodifikator,
E) von 40 bis 60 Gew.-% Magnesiumhydroxid und
F) von 0 bis 2 Gew.-% Verarbeitungsadditiven.

2. Formmassen gemäß Anspruch 1, dadurch gekennzeichnet, daß sie von 10 bis 30 Gew.-% Verstärkungsstofe enthalten.

3. Formmassen gemäß Anspruch 1, dadurch gekennzeichnet, daß sie von 4 bis 10 Gew.-% Elastomermodifikator enthalten.

4. Formmassen nach Anspruch 1, dadurch gekennzeichnet, daß als Verstärkungsstoff C) Glasfasern, Kohlefasern, Mineralfasern oder Mischungen daraus verwendet werden.

5. Verwendung der Formmassen gemäß Anspruch 1 zur Herstellung geformter Teile.
